# EUROPEAN PATENT APPLICATION

(11) **EP 4 546 555 A1**
(43) Date of publication of application: **30.04.2025**
(21) Application number: 22949720.1
(22) Date of filing: 04.07.2022
(51) Int. Cl.: H01M 50/593, H01M 50/586

(54) **BATTERY CELL, BATTERY, AND ELECTRICAL APPARATUS**

(71) Applicant: Contemporary Amperex Technology (Hong Kong) Limited, Hong Kong (HK)
(72) Inventor: LEI, Yuyong, Ningde, Fujian 352100 (CN); GUO, Zhijun, Ningde, Fujian 352100 (CN); YANG, Rui, Ningde, Fujian 352100 (CN); LI, Chuan, Ningde, Fujian 352100 (CN)
(74) Representative: Herrmann, Uwe
(86) International application number: PCT/CN2022/103736
(87) International publication number: WO 2024/007130

(57) **Abstract**

The present application provides a battery cell, a battery, and an electrical apparatus. The battery cell comprises a shell, an electrode assembly, an insulating member and a support member. The electrode assembly is accommodated in the shell and comprises an electrode main body and a tab, the tab being led out from an end of the electrode main body. The insulating member is accommodated in the shell and is attached to the peripheral side surface of the electrode main body, and the insulating member is provided with an opening. The support member is used for supporting the electrode assembly and covering the opening. The battery cell provided by the present application helps to improve the deformation consistency of parts in the electrode assembly, and reduces the risk of lithium plating of the electrode assembly, thus improving the safety performance of the battery cell.

## Description

### TECHNICAL FIELD

The present application relates to the technical field of batteries, and more specifically relates to a battery cell, a battery and an electrical apparatus.

### BACKGROUND

Batteries are widely used in electronic devices such as mobile phones, laptops, electromobiles, electric cars, electric airplanes, electric ships, electric toy cars, electric toy ships, electric toy airplanes, and power tools. Battery cells may include nickel-cadmium battery cells, nickel-hydrogen battery cells, lithium ion battery cells, secondary alkaline zinc-manganese battery cells, etc.

In the development of battery cell technology, in addition to improving the performance of battery cells, how to improve the safety performance of the battery cells is also a problem that cannot be ignored. Improving the safety performance of battery cells has a significant impact on energy savings. Therefore, how to improve the safety performance of the battery cells is a technical problem to be continuously solved in battery cell technology.

### SUMMARY OF THE INVENTION

The present application provides a battery cell, a battery and an electrical apparatus, aiming to improve the safety performance of the battery cell.

In a first aspect, an embodiment of the present application provides a battery cell. The battery cell includes a shell, an electrode assembly, an insulating member and a support member; the electrode assembly is accommodated in the shell and includes an electrode main body and a tab, the tab being led out from an end of the electrode main body; the insulating member is accommodated in the shell and is attached to the peripheral side surface of the electrode main body, and the insulating member is provided with an opening; and the support member is used for supporting the electrode assembly and covering the opening.

According to the battery cell provided by the embodiment of the present application, the insulating member is provided with the opening, in the working process of the battery cell, the opening can provide a space for expansion of the electrode assembly, so that the risk of non-uniform deformation of each part in the expansion process of the electrode assembly is reduced; and the battery cell helps to improve the deformation consistency of parts in the electrode assembly, and reduces the risk of lithium plating of the electrode assembly, thus improving the safety performance of the battery cell.

In some embodiments, the electrode assembly is provided with two first surfaces which are oppositely arranged in a second direction, and two second surfaces which are oppositely arranged in a third direction; the second surfaces are connected to the two first surfaces; the tab is positioned at an end of the electrode main body in a first direction; the first direction, the second direction and the third direction are vertical to one another; at least one of the two first surfaces and the two second surfaces is arranged opposite to the opening. Therefore, the opening can be formed in a proper position on the insulating member according to the specific expansion deformation direction of the electrode assembly, and the expansion deformation of the electrode assembly can be released to the maximum extent.

In some embodiments, openings are formed in parts, opposite to two first surfaces, of the insulating member respectively. Therefore, it helps to improve the deformation consistency of the electrode assembly, and reduces the risk of lithium plating of the electrode assembly.

In some embodiments, at least parts of the two openings are oppositely arranged along the second direction. Therefore, in the expansion process of the electrode assembly, the release amounts of the expansion deformation of two sides, symmetrically arranged along the second direction, of the electrode assembly are consistent as much as possible, thus further improving the expansion deformation consistency of the electrode assembly.

In some embodiments, the area of the first surfaces is smaller than that of the second surfaces, and at least part of at least one of the two first surfaces is opposite to the corresponding opening. For a laminated electrode assembly or a wound electrode assembly, in the working process of the battery cell, the expansion deformation of the electrode assembly mainly occurs in the direction where two second surfaces with larger areas are opposite, namely the third direction, so that at least part of at least one of the two first surfaces is opposite to the corresponding opening, the expansion deformation of the electrode assembly can be released to the maximum extent, and the risk of lithium plating of the electrode assembly is reduced to the maximum extent.

In some embodiments, the electrode assembly includes two electrode plates with opposite polarities and a spacer, and the spacer and the two electrode plates are stacked in the third direction. Therefore, the electrode assembly is laminated and is stacked in the third direction, and the electrode assembly mainly generates expansion deformation in the third direction along with the cyclic charging and discharging of the battery cell. Therefore, the expansion deformation of the electrode assembly is released to the maximum extent, and the risk of lithium plating of the electrode assembly is reduced to the maximum extent.

In some embodiments, the first surfaces are arc-shaped, and the second surfaces are planar. The corresponding electrode assembly is of a winding type, and the compaction density of the electrode assembly along the third direction is greater than that along the second direction, so the electrode assembly mainly generates expansion deformation along the third direction along with cyclic charging and discharging of the battery cell; at least one part of at least one first surface is arranged opposite to the corresponding opening, thus the expansion deformation of the electrode assembly is released to the maximum extent, and the risk of lithium plating of the electrode assembly is reduced to the maximum extent.

In some embodiments, along the circumferential direction of the electrode main body, the opening is provided with two opposite side edges, and a distance D between the two side edges meets: D≥0mm. The distance between the two side edges of the openings may be reasonably set according to the compaction density and the like of the electrode assembly, so that the expansion deformation of the electrode assembly is released, and moreover, the insulation isolation effect of the insulating member on the electrode assembly and the shell is ensured.

In some embodiments, the size of the support member corresponding to the opening is W, W>D. The support member can still completely cover the opening after the electrode assembly is expanded and deformed, so that the insulation isolation of the electrode assembly and the shell is ensured, and the battery cell can normally work.

In some embodiments, the shell is provided with an accommodating space, and the electrode assembly is accommodated in the accommodating space; and along the direction where the two side edges are opposite, the maximum size of the accommodating space is S, W-D≥0.07S. Therefore, in the expansion process of the electrode assembly, the possibility that the support member can cover the opening can be improved as the increase of the distance between the two side edges of the opening, and thus the working safety of the battery cell is further improved.

In some embodiments, the tab is arranged at an end of the electrode main body along the first direction, and the opening is formed across the insulating member along the first direction. Therefore, the expansion deformation of the electrode assembly can be quickly released to the maximum extent, thus further improving the expansion deformation consistency of the electrode assembly.

In some embodiments, the tab is arranged at the end of the electrode main body along the first direction, the opening includes a plurality of sub-openings, and the sub-openings are at least formed at intervals along the first direction. According to such arrangement, in the expansion process of the electrode assembly, a part between the two sub-openings of the insulating member can be conveniently deformed or even fractured along a direction vertical to the first direction, and thus the expansion deformation of the electrode assembly can be released.

In some embodiments, along the first direction, the size of the insulating member is L, the total size of the sub-openings is L1, 1/3≤L1/L<1. In the expansion process of the electrode assembly, under the effect of expansion force, the parts, at the two ends of the sub-openings along the first direction, of the insulating member are more easily fractured, then the insulating member can be integrally fractured along the first direction, and therefore, the purpose of releasing the expansion deformation of the electrode assembly can be conveniently achieved.

In some embodiments, the thickness e of the parts, at the two sides of the sub-openings along the first direction, of the insulating member meets: 0.03mm≤e≤0.2mm. Therefore, the processing of the insulating member is facilitated, in addition, areas, on the two sides of the sub-openings along the first direction, of the insulating member have smaller cross section areas, and further, smaller fracture stress is realized, and areas, at the two sides of the sub-openings along the first direction, of the insulating member can be fractured in time under the effect of the expansion force of the electrode assembly, so that a sufficient space is reserved for the expansion of the electrode assembly.

In some embodiments, the tab is arranged at the end of the electrode main body along the first direction; and the insulating member extends beyond the electrode main body along the first direction, and the distance h by which the insulating member extends beyond the electrode main body meets: h≥2mm. Therefore, the insulation effect of the insulating member on the electrode assembly and the shell is ensured, and the risk of short circuit of the electrode assembly and the shell is reduced.

In some embodiments, the insulating member is connected to the electrode main body in a bonding manner. Therefore, a connection relationship between the insulating member and the electrode main body can be kept, and the risk of insulation failure of the electrode main body and the shell caused by movement of the insulating member relative to the circumferential direction of the electrode main body is reduced.

In some embodiments, the support member is connected to the insulating member in a bonding manner. Therefore, the insulation effect of the support member on the electrode main body and the shell can be kept.

In some embodiments, one part of the insulating member is bent relative to the first direction and covers at least one part of the end of the electrode main body along the first direction. Therefore, clamping of the electrode main body and the insulating member can be achieved through the corresponding position of the insulating member and the end of the electrode main body, so that the risk that insulation of the electrode main body and the shell cannot be achieved due to movement of the insulating member along the first direction is reduced.

In some embodiments, the insulating member includes a first insulating member and a second insulating member; the first insulating member includes a first part and two second parts connected to the first part; the second insulating member includes a third part and two fourth parts connected to the third part; the first part is arranged opposite to one second surface; the third part is arranged opposite to the other second surface; the second part and the fourth part on the same side of the electrode assembly are arranged opposite to the first surfaces; and the second part and the fourth part on the same side of the electrode assembly are arranged at an interval and form an opening. Therefore, the deformation consistency of the electrode assembly is further improved.

In some embodiments, the support member is respectively connected to the second part and the fourth part on the same side of the electrode assembly in a bonding manner. According to such arrangement, the insulation effect of the support member on the electrode assembly and the shell can be guaranteed.

In a second aspect, an embodiment of the present application provides a battery, which includes the battery cell of any embodiment in the first aspect.

According to the battery provided by the embodiment of the present application, because the battery cell provided in any embodiment is adopted, the same technical effect is achieved and will not be listed here.

In a third aspect, an embodiment of the present application provides an electrical apparatus, which includes the battery of the embodiment in the second aspect, and the battery is used for providing electric energy.

According to the electrical apparatus provided by the embodiment of the present application, because the battery provided by the embodiment of the present application is adopted, the same technical effect is achieved and will not be listed here.

According to the battery cell, battery and electrical apparatus provided by the embodiments of the present application, the insulating member is provided with the opening, in the working process of the battery cell, the opening can provide the space for expansion of the electrode assembly, then the risk of non-uniform deformation of each part in the expansion process of the electrode assembly is reduced, the deformation consistency of parts in the electrode assembly is improved, and the risk of lithium plating of the electrode assembly is reduced, thus improving the safety performance of the battery cell.

### DESCRIPTION OF DRAWINGS

In order to more clearly illustrate the technical solution of the embodiments of the present application, the drawings that need to be used in the embodiments of the present application will be briefly introduced below, and it is obvious that the drawings described below are only some embodiments of the present application, and for those skilled in the art, other drawings can also be obtained according to the drawings without paying creative labor.
FIG. 1 is a structural schematic diagram of a vehicle provided by an embodiment of the present application;
FIG. 2 is an exploded schematic diagram of a battery provided by an embodiment of the present application;
FIG. 3 is a structural schematic diagram of a battery module in a battery provided by an embodiment of the present application;
FIG. 4 is an exploded schematic diagram of a battery cell provided by some embodiments of the present application;
FIG. 5 is an another exploded structural schematic diagram of a battery cell provided by an embodiment of the present application;
FIG. 6 is a structural schematic diagram of an insulating member in a battery cell provided by an embodiment of the present application;
FIG. 7 is a main view of a battery cell provided by an embodiment of the present application;
FIG. 8 is a schematic diagram of a cross-sectional structure in A-A shown in FIG. 7; and
FIG. 9 is a partial enlarged view of a part B in FIG. 8.

The accompanying drawings may not be drawn to actual scale.

### Description of reference numerals

1, vehicle; 1a, motor; 1b, controller;
10, battery; 11, first box part; 12, second box part;
20, battery module;
30, battery cell;
31, shell; 31a, accommodating space; 311, shell body; 311a, port; 312, end cover;
32, electrode assembly; 321, electrode main body; 3211, first surface; 3212, second surface; 322, tab;
33, insulating member; 33a, opening; 331a, sub-opening; 332a, side edge; 331, first insulating member; 3311, first part; 3312, second part; 332, second insulating member; 3321, third part; 3322, fourth part;
34, support member;
X, first direction; Y, second direction; and Z, third direction.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meaning of the above terms in the present application may be understood on a case-by-case basis.

The term "and/or" in the present application is merely an association that describes the associated object, indicating that there can be three kinds of relationships, for example, C and/or D, which can mean that there is only C, there are C and D, and there is only D. In addition, the character "/" in this application generally indicates that the relationship between the preceding and following related objects is an "or".

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

The term "a plurality of" in the present application refers to more than two (inclusive).

In the present application, a battery cell may include a secondary lithium-ion battery cell, a primary lithium-ion battery cell, a lithium-sulfur battery cell, a sodium lithium-ion battery cell, a sodium-ion battery cell or a magnesium-ion battery cell, etc., which is not limited in the embodiment of the present application. The battery cell may be in the shape of a cylinder, a flat body, a cuboid or other shapes, which is not limited in the embodiment of the present application. The battery cells are generally classified into three types depending on the way of package: cylindrical battery cells, prismatic battery cells and pouch battery cells, which are also not limited in the embodiments of the present application.

The battery mentioned in the embodiments of the present application refers to a single physical module including one or more battery cells to provide a higher voltage and capacity. For example, the battery mentioned in the present application may include a battery module or a battery pack, etc. The battery generally includes a box for packaging one or more battery cells. The box can avoid liquids or other foreign objects affecting the charging or discharging of the battery cell.

The battery cell includes an electrode assembly and an electrolyte; and the electrode assembly includes a positive electrode plate, a negative electrode plate and a spacer. The battery cell mainly works by means of movement of metal ions between the positive electrode plate and the negative electrode plate. The positive electrode plate includes a positive electrode current collector and a positive electrode active material layer, and the positive electrode active material layer coats a surface of the positive electrode current collector; and the positive electrode current collector includes a positive electrode current collecting part and a positive electrode convex part protruding out of the positive electrode current collecting part, the positive electrode current collecting part is coated with the positive electrode active material layer, at least part of the positive electrode convex part is not coated with the positive electrode active material layer, and the positive electrode convex part is used as a positive electrode tab. By taking a lithium-ion battery as an example, the material of the positive electrode current collector may be aluminum, the positive electrode active material layer includes a positive electrode active material, and the positive electrode active material may be lithium cobalt oxide, lithium iron phosphate, ternary lithium or lithium manganate and the like. The negative electrode plate includes a negative electrode current collector and a negative electrode active material layer, and the negative electrode active material layer coats the surface of the negative electrode current collector; the negative electrode current collector includes a negative electrode current collecting part and a negative electrode convex part protruding out of the negative electrode current collecting part, the negative electrode current collecting part is coated with the negative electrode active material layer, at least part of the negative electrode convex part is not coated with the negative electrode active material layer, and the negative electrode convex part is used as a negative electrode tab. The material of the negative electrode current collector may be copper, the negative electrode active material layer includes a negative electrode active material, and the negative electrode active material may be carbon or silicon and the like. In order to ensure that no fusing occurs when a large current passes, a plurality of positive electrode tabs are stacked together, and a plurality of negative electrode tabs are stacked together. The material of the spacer may be PP (polypropylene) or PE (polyethylene) and the like. **In** addition, the electrode assembly may be of a winding structure or a laminated structure, and the embodiment of the present application is not limited to the above.

After the inventor found the problem that the safety performance of the battery cell is not high, systemic analysis and study are performed on the structure and working process of the battery cell, and the result shows that the battery cell is usually provided with the insulating member which wraps around the circumference of the electrode assembly to realize the insulation between the electrode assembly and a shell. **In** the working process of the battery cell, a motor component will undergo a certain expansion, and due to the binding of the insulating member, the expansion stress inside the electrode assembly cannot be released, causing inconsistent deformation of different parts in the electrode assembly, resulting in the problem of lithium plating of the electrode assembly, which seriously affects the safety performance of the battery cell.

Based on the above-mentioned problems found by the inventor, the inventor has improved the structure of the battery cell, and the technical solution described in the embodiment of the present application is suitable for a battery cell, a battery containing the battery cell, and an electrical device using the battery.

The battery cell provided by the embodiment of the present application includes a shell, an electrode assembly, an insulating member and a support member. The electrode assembly is accommodated in the shell and includes an electrode main body and a tab, the tab being led out from an end of the electrode main body. The insulating member is accommodated in the shell and is attached to the peripheral side surface of the electrode main body, and the insulating member is provided with an opening. The support member is used for supporting the electrode assembly and covering the opening.

According to the battery cell provided by the embodiment of the present application, the insulating member is provided with the opening, and the support member is arranged to cover the opening, so that on the premise of realizing insulation between the electrode assembly and the shell, the electrode assembly can release stress through the opening in an expansion process, thus the deformation of all parts is consistent as much as possible in the expansion deformation process of the electrode assembly; and therefore, the risk of lithium plating of the electrode assembly is reduced, and the safety performance of the battery cell can be improved.

The electrical apparatus may be a vehicle, a mobile phone, a portable device, a laptop, a ship, a spacecraft, an electric toy, an electric tool and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

The following embodiment, for the sake of convenience, are illustrated with an example of the electrical device for the vehicle.

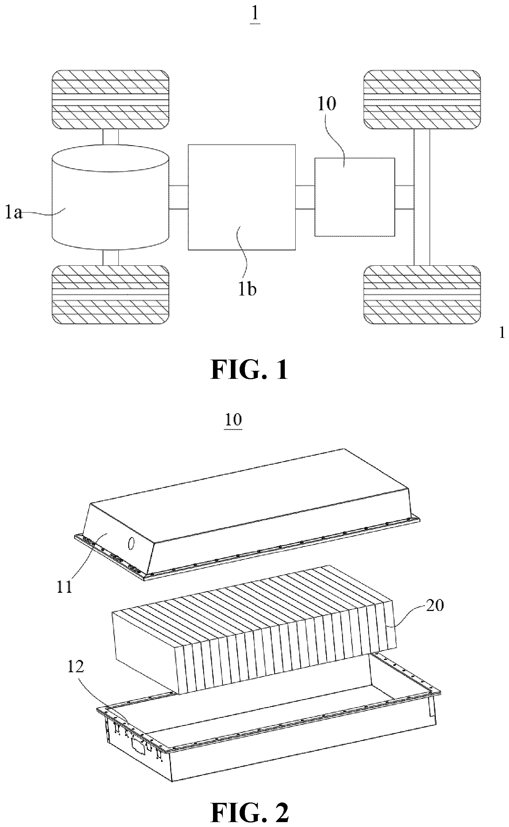

As shown in FIG. 1, a battery 10 is provided inside a vehicle 1. The battery 10 may be arranged at the bottom or the head or the tail of a vehicle 1. The battery 10 may be used for supplying power to the vehicle 1, for example, the battery 10 may serve as an operation power source of the vehicle 1.

The vehicle 1 may further include a controller 1b and a motor 1a. The controller 1b is used for controlling the battery 10 to supply power to the motor 1a, for example, the battery 10 meets the working power utilization requirements during starting, navigation and driving of the vehicle 1.

In some embodiments of the present application, the battery 10 can serve as the operation power source of the vehicle 1 and can also serve as a driving power source of the vehicle 1, and replaces or partially replace fuel oil or natural gas to provide driving power for the vehicle 1.

With reference to FIG. 2, the battery 10 includes a battery cell (not shown in FIG. 2). The battery 10 may further include a box used for accommodating the battery cell.

The box is used for accommodating the battery cell and may be in various structural forms. In some embodiments, the box may include a first box part 11 and a second box part 12. The first box part 11 and the second box part 12 are mutually covered. The first box part 11 and the second box part 12 jointly define an accommodating space used for accommodating the battery cell. The second box part 12 may be of a hollow structure with one end opened, the first box part 11 is of a plate-shaped structure, and the first box part 11 covers an opening side of the second box part 12 to form the box with the accommodating space; and each of the first box part 11 and the second box part 12 may also be of a hollow structure with one side opened. The opening side of the first box part 11 covers the opening side of the second box part 12 to form the box with the accommodating space. Definitely, the first box part 11 and the second box part 12 may be in various shapes such as cylinders and cuboids.

In order to improve the sealing performance after the first box part 11 and the second box part 12 are connected, a sealing member such as a sealant and a sealing ring may also be arranged between the first box part 11 and the second box part 12.

It is assumed that the first box part 11 covers the second box part 12, the first box part 11 can also be called an upper box cover, and the second box part 12 can also be called a lower box.

In the battery 10, one or a plurality of battery cells can be arranged. If the plurality of battery cells are provided, the plurality of battery cells can be connected in series or in parallel or in series-parallel connection. Series-parallel connection refers to that the plurality of battery cells are connected in series and in parallel. The plurality of battery cells can be directly connected in series or in parallel or in series-parallel connection, and then the whole body formed by the plurality of battery cells is accommodated in the box; or the plurality of battery cells are connected in series or in parallel or in series-parallel connection to form battery modules 20. Then a plurality of battery modules 20 are connected in series or in parallel or in series-parallel connection as a whole body and are accommodated in the box.

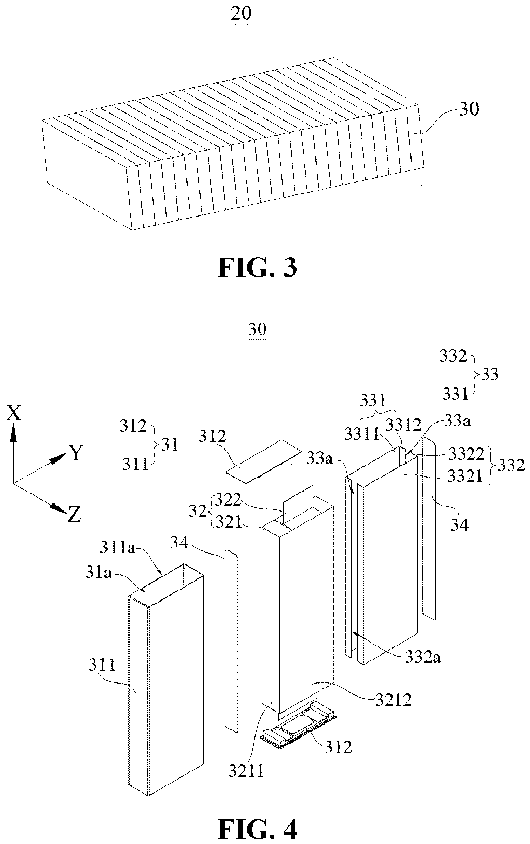

In some embodiments, as shown in FIG. 3, FIG. 3 is a structural schematic diagram of a battery module 20 shown in FIG. 2. In the battery module 20, a plurality of battery cells 30 are provided. The plurality of battery cells 30 are connected in series or in parallel or in series-parallel connection to form the battery modules 20. Then a plurality of battery modules 20 are connected in series or in parallel or in series-parallel connection as a whole body and are accommodated in the box.

In some embodiments, the plurality of battery cells 30 in the battery modules 20 can be electrically connected through a confluence component, so that the parallel connection or series connection or series-parallel connection of the plurality of battery cells 30 in the battery modules 20 is realized.

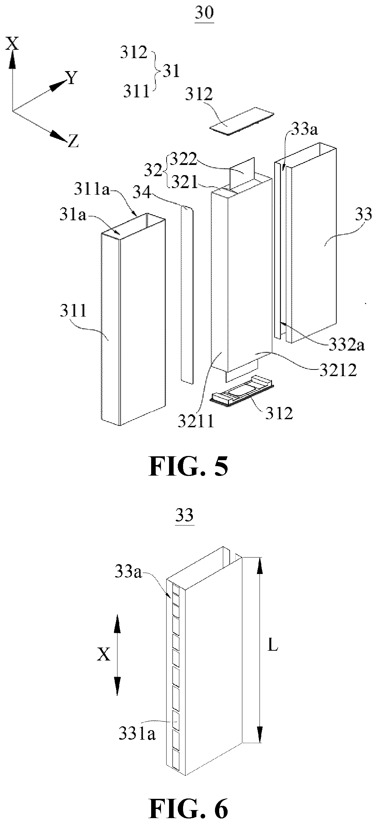

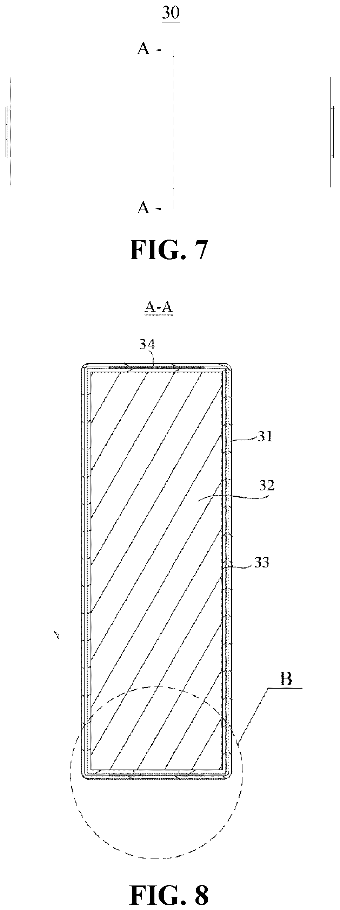

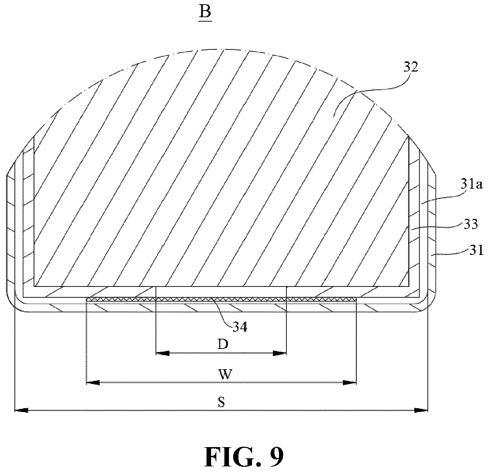

FIG. 4 is an exploded schematic diagram of a battery cell 30 shown in FIG. 3; FIG. 5 is another exploded schematic diagram of a battery cell 30 shown in FIG. 3. FIG. 6 is a structural schematic diagram of an insulating member 33 in a battery cell provided by an embodiment of the present application; FIG. 7 is a main view of a battery cell 30 provided by an embodiment of the present application; FIG. 8 is a schematic diagram of a cross-sectional structure in A-A shown in FIG. 7; and FIG. 9 is a partial enlarged view of a part B in FIG. 8.

As shown in FIG. 4 and FIG. 5, the battery cell 30 provided by the embodiment of the present application includes a shell 31, an electrode assembly 32, an insulating member 33 and a support member 34. The electrode assembly 32 is accommodated in the shell 31 and includes an electrode main body 321 and a tab 322, the tab 322 being led out from an end of the electrode main body 321. The insulating member 33 is accommodated in the shell 31 and is attached to the peripheral side surface of the electrode main body 321, and the insulating member 33 is provided with an opening 33a. The support member 34 is used for supporting the electrode assembly 32 and covering the opening 33a.

Optionally, the shell 31 may include a shell body 311 and end covers 312; the shell body 311 may be of a hollow structure with a port 311a in one side, and the end covers 312 cover the opening 33a of the shell body 311 and form sealing connection, so as to form a sealing space for accommodating the electrode assembly 32 and an electrolyte. Or, the shell body 311 may be of a hollow structure with ports 311a in two ends, and the two end covers 312 cover the ports 311a in the two ends of the shell body 311 respectively and form sealing connection, so as to form a sealing space for accommodating the electrode assembly 32 and the electrolyte.

Optionally, the shell 31 can further accommodate the electrolyte such as an electrolyte solution.

When assembling the battery cell 30, the electrode assembly 32 can be first placed in the shell body 311, then the end cover 312 covers the port 311a of the shell body 311, and then the electrolyte is injected into the shell body 311 through an electrolyte injection port in the end cover 312.

The shell body 311 may be in various shapes, such as a cylinder and a cuboid. The shape of the shell body 311 may be determined according to the specific shape of the electrode assembly 32. For example, if the electrode assembly 32 is of a cylinder structure, the shell body 311 may be of a cylinder structure. If the electrode assembly 32 is of a cuboid structure, the shell body 311 may be of a cuboid structure. In FIG. 4, exemplarily, the shell body 311 and the electrode assembly 32 are both of cuboid structures.

There may be various materials of the shell body 311, such as copper, iron, aluminum, stainless steel and aluminum alloy. There is no special limitation in the embodiment of the present application.

One or a plurality of electrode assemblies 32 may accommodated in the shell body 311. In FIG. 4, one electrode assembly 32 is accommodated in the shell body 311.

The tab 322 in the electrode assembly 32 is divided into a positive electrode tab and a negative electrode tab. The positive electrode tab may be the part, not coated with the positive electrode active material layer, in the positive electrode current collector. The negative electrode tab may be a part, not coated with the negative electrode active material layer, in the negative electrode current collector.

The positive electrode tab and the negative electrode tab may be led out from the same end of the electrode main body 321, or the positive electrode tab and the negative electrode tab are led out from two opposite ends of the electrode main body 321 respectively.

The insulating member 33 is accommodated in the shell 31 and is attached to the peripheral side surface of the electrode main body 321, the insulating member 33 and the peripheral side surface of the electrode main body 321 may be connected together in a bonding manner or other modes, or, the insulating member 33 is only in contact with the electrode main body 321, so that the insulating arrangement of the electrode assembly 32 and the shell 31 is realized through the insulating member 33.

The insulating member 33 is provided with the opening 33a, the opening 33a may be formed across the insulating member 33 in any direction, or, the opening 33a may be arranged at intervals in any direction.

Optionally, the opening 33a of the insulating member 33 may be formed in a material removing mode, or the position, corresponding to the opening 33a, of the insulating member 33 is only cut off, that is, the opening 33a is not formed in the insulating member 33 in a material removing mode, so that at the beginning of manufacturing the battery cell 30, the insulating member 33 completely covers the peripheral side surface of the electrode assembly 32, and with the increase of the service time of the battery cell 30, the electrode assembly 32 expands, the opening 33a is opened, and the electrode assembly 32 can be exposed out of the insulating member 33 through the opening 33a.

Optionally, the insulating member 33 may be provided with one opening 33a, or the insulating member 33 is provided with a plurality of openings 33a, and the plurality of openings 33a may be arranged at intervals.

Optionally, the electrode assembly 32 may be cylindrical or square; in an embodiment that the electrode assembly 32 is cylindrical, the plurality of openings 33a may extend along the axial direction of the electrode assembly 32 and are arranged at intervals along the circumferential direction of the electrode assembly 32. In an embodiment that the electrode assembly 32 is square, the openings 33a may be arranged in an area, corresponding to any surface of the electrode assembly 32, of the insulating member 33, or the openings 33a are arranged in areas, corresponding to a plurality of surfaces of the electrode assembly 32, of the insulating member 33.

The support member 34 supports the electrode assembly 32 and covers the opening 33a, so that the support member 34 provides a certain support effect for the electrode assembly 32, and a risk that the electrode assembly 32 is greatly deformed to affect normal work is reduced. The support member 34 covers the opening 33a, so that the part, corresponding to the opening 33a, of the electrode assembly 32 is insulated from the shell 31.

Optionally, the support member 34 may be arranged between the insulating member 33 and the electrode assembly 32 and covers the opening 33a, or, the insulating member 33 may be arranged between the insulating member 33 and the shell 31 and covers the opening 33a. It can be selected according to the actual requirements and is not limited here.

Optionally, the support member 34 and the insulating member 33 may be only in contact or propped against each other, or bonding connection between the support member 34 and the insulating member 33 can be achieved in a bonding manner.

Optionally, the insulating member 33 may be an expansion adhesive, or a part made of other insulating materials.

The opening 33a is formed in the insulating member 33, so in the working process of the battery cell 30, the electrode assembly 32 is gradually expanded, the insulating member 33 is deformed under the expansion force of the electrode assembly 32, the opening 33a is enlarged, and a space is provided for expansion of the electrode assembly 32. Or, in an embodiment that the opening 33a does not go across the insulating member 33, along with gradual expansion of the electrode assembly 32, the area, provided with the opening 33a, of the insulating member 33 is deformed under the expansion force of the electrode assembly 32, or is broken, and therefore a space can still be provided for expansion of the electrode assembly 32.

According to the battery cell 30 provided by the embodiment of the present application, the insulating member 33 is provided with the opening 33a, so in the working process of the battery cell 30, the opening 33a can provide the space for expansion of the electrode assembly 32, the risk that all parts are not uniformly deformed in the expansion process of the electrode assembly 32 is reduced, the deformation consistency of all the parts in the electrode assembly 32 is improved, the risk of lithium plating of the electrode assembly 32 is reduced, thus further improving the safety performance of the battery cell 30.

In some embodiments, the electrode assembly 32 is provided with two first surfaces 3211 which are oppositely arranged in a second direction Y, and two second surfaces 3212 which are oppositely arranged in a third direction Z; the second surfaces 3212 are connected to the two first surfaces 3211, tabs 322 are located at the two ends of the electrode main body 321 in the first direction X, and the first direction X, the second direction Y and the third direction Z are vertical to one another. At least one of the two first surfaces 3211 and the two second surfaces 3212 is opposite to the opening 33a.

Optionally, the first surfaces 3211 may be planes, or the first surfaces 3211 can be curved surfaces. Similarly, the second surface 3212 may be planes, or the second surfaces 3212 may be curved surfaces.

Optionally, the area of the first surfaces 3211 can be set to be larger than that of the second surfaces 3212, or the area of the first surfaces 3211 can be set to be smaller than that of the second surfaces 3212.

At least one of the two first surfaces 3211 and the two second surfaces 3212 is set to be opposite to the opening 33a, that is, the area in which the insulating member 33 is set to be opposite to one or more of the two first surfaces 3211 and the two second surfaces 3212 is provided with the opening 33a.

It is to be understood that in an embodiment that the opening 33a is formed in an area in which the insulating member 33 is opposite to the first surface 3211, the opening 33a may be enlarged in the third direction Z, that is, the opening 33a can release the expansion deformation of the electrode assembly 32 in the third direction Z. In an embodiment that the opening 33a is arranged in an area in which the insulating member 33 is opposite to the second surface 3212, the opening 33a can be enlarged in the second direction Y, that is, the opening 33a can release the expansion deformation of the electrode assembly 32 in the second direction Y.

Therefore, the opening 33a may be arranged at a proper position of the insulating member 33 according to the specific expansion deformation direction of the electrode assembly 32, so as to release the expansion deformation of the electrode assembly 32 to the maximum extent.

In some embodiments, the parts, opposite to the two first surfaces 3211, of the insulating member 33 are respectively provided with the openings 33a.

Therefore, when the electrode assembly 32 is subjected to expansion deformation in the third direction Z, two openings 33a which are respectively opposite to the two first surfaces 3211 are deformed in the third direction Z, and the expansion deformation of the two sides of the electrode assembly 32 in the second direction Y can be released, so that the expansion deformation consistency of the electrode assembly 32 is further improved, and the risk of lithium plating of the electrode assembly 32 is reduced.

Optionally, the openings 33a may be respectively formed in the parts, opposite to the two first surfaces 3211, of the insulating member 33 at the same time, so that the deformation of the electrode assembly 32 in the second direction Y is further released, and the deformation consistency of the electrode assembly 32 is improved.

In some embodiments, at least parts of the two openings 33a are oppositely arranged in the second direction Y.

Optionally, the two openings 33a opposite to the two first surfaces 3211 may be partially oppositely arranged in the second direction Y, and may also be completely oppositely arranged.

Therefore, in the expansion process of the electrode assembly 32, the release amounts of the expansion deformation of the two sides, symmetrically arranged in the second direction Y, of the electrode assembly 32 are consistent as much as possible, and thus the expansion deformation consistency of the electrode assembly 32 is further improved.

In some embodiments, the area of the first surfaces 3211 is smaller than that of the second surfaces 3212, and at least part of at least one of the two first surfaces 3211 is opposite to the opening 33a.

Optionally, the opening 33a can be formed in the area, opposite to one of the first surfaces 3211, of the insulating member 33, or, the openings 33a are formed in the areas, opposite to the two first surfaces 3211, of the insulating member 33.

Optionally, the opening 33a may be arranged opposite to a part of one first surface 3211, or the opening 33a is arranged opposite to the whole first surfaces 3211.

Optionally, the electrode assembly 32 may be of a winding type, or the electrode assembly 32 is of a laminated type. In an embodiment that the electrode assembly 32 is of the winding type, the first surface 3211 may be an arc-shaped surface; and in an embodiment that the electrode assembly 32 is of the laminated type, the first surface 3211 may be a plane.

For the laminated type electrode assembly 32 or the winding type electrode assembly 32, in the working process of the battery cell 30, the expansion deformation of the electrode assembly 32 mainly occur in the direction where two second surfaces 3212 with larger areas are opposite, namely the third direction Z, so that at least part of at least one of the two first surfaces 3211 is arranged opposite to the opening 33a, the expansion deformation of the electrode assembly 32 can be released to the maximum extent, and the risk of lithium plating of the electrode assembly 32 can be reduced to the maximum extent.

In some embodiments, the electrode assembly 32 includes two electrode plates with opposite polarities and a spacer, and the spacer and the two electrode plates are stacked in the third direction Z.

The corresponding electrode assembly 32 is of a laminated type and is stacked in the third direction Z, and the electrode assembly 32 mainly expands and deforms in the third direction Z along with the cyclic charging and discharging of the battery cell 30. Therefore, at least part of at least the first surfaces 3211 is arranged opposite to the opening 33a, so that the expansion deformation of the electrode assembly 32 can be released to the maximum extent, and the risk of lithium plating of the electrode assembly 32 can be reduced to the maximum extent.

In some embodiments, the first surfaces 3211 are arc-shaped, and the second surfaces 3212 are planar.

Therefore, the electrode assembly 32 may be a winding type electrode assembly 32, and after the electrode assembly 32 is wound, pressure in the third direction Z will be applied to the electrode assembly 32 to improve the compaction density of the electrode assembly 32 in the third direction Z. As the compaction density of the electrode assembly 32 in the third direction Z is greater than that in the second direction Y, along with cyclic charging and discharging of the battery cell 30, the electrode assembly 32 mainly be subjected to expansion deformation in the third direction Z, and at least part of at least one first surfaces 3211 is arranged opposite to the opening 33a, so that the expansion deformation of the electrode assembly 32 is released to the maximum extent, and the risk of lithium plating of the electrode assembly 32 is reduced to the maximum extent.

As shown in FIG. 5, FIG. 7, FIG. 8 and FIG. 9, in some embodiments, the opening 33a is provided with two opposite side edges 332a in the circumferential direction of the electrode main body 321, and the distance D between the two side edges 332a meets: D≥0mm.

Optionally, the distance D between the two side edges 332a can be equal to 0 mm, 1 mm or 2 mm and the like.

In an embodiment that the distance between the two side edges 332a is shown as D=0mm, the area, corresponding to the opening 33a, of the insulating member 33 is only blocked, and along with gradual expansion of the electrode assembly 32, the opening 33a is gradually opened, and the distance between the two side edges 332a is gradually increased. According to such arrangement, the purpose of releasing expansion deformation of the electrode assembly 32 can still be achieved.

Therefore, the distance between the two side edges 332a of the opening 33a may be reasonably set according to the compaction density and the like of the electrode assembly 32, so that the expansion deformation of the electrode assembly 32 is released, and moreover, the insulation isolation effect of the insulating member 33 on the electrode assembly 32 and the shell 31 is guaranteed.

In some embodiments, the size of the support member 34 corresponding to the opening 33a is W in the direction where the two side edges 332a are opposite, W>D.

Optionally, W may be 1.1D, 1.2D or 1.3D and the like.

After the electrode assembly 32 is expanded and deformed, the distance between the two side edges 332a of the opening 33a is increased, and therefore, it is set as W>D; and the support member 34 can still completely cover the opening 33a after the electrode assembly 32 is expanded and deformed, so that the insulation isolation between the electrode assembly 32 and the shell 31 is ensured, and the battery cell 30 can work normally.

In some embodiments, the shell 31 is provided with the accommodating space 31a, and the electrode assembly 32 is accommodated in the accommodating space 31a. The maximum size of the accommodating space 31a is S along the direction where the two side edges 332a are opposite, W-D≥0.07S.

Optionally, (W-D) may be 0.007S, 0.008S, 0.01S or 0.012S and the like.

Therefore, in the expansion process of the electrode assembly 32, the possibility that the support member 34 can cover the opening 33a is improved along with the increase of the distance between the two side edges 332a of the opening 33a, and thus the working safety of the battery cell 30 is further improved.

In some embodiments, the tab 322 is arranged at the end of the electrode main body 321 along the first direction X, and the opening 33a is formed across the insulating member 33 along the first direction X.

It is to be understood that the opening 33a is formed across the insulating member 33 along the first direction X, the two side edges 332a of the opening 33a extend along the first direction X, and the two side edges 332a of the opening 33a can be subjected to relative movement along the direction vertical to the first direction X in the expansion process of the electrode assembly 32, so that the size of the opening 33a is increased, and a space is further provided for the expansion deformation of the electrode assembly 32.

Therefore, the opening 33a is formed across in the first direction X, expansion deformation of the electrode assembly 32 can be rapidly released to the maximum degree, and then the expansion deformation consistency of the electrode assembly 32 is improved.

As shown in FIG. 5 and FIG. 6, in some embodiments, the tab 322 is arranged at the end of the electrode main body 321 in the first direction X, the opening 33a includes a plurality of sub-openings 331a, and the sub-openings 331a are arranged at intervals at least in the first direction X.

Optionally, the plurality of sub-openings 331a may be arranged in a row in the first direction X, or the plurality of sub-openings 331a may be arranged in the first direction X and may also be arranged in the direction vertical to the first direction X, namely, the plurality of sub-openings 331a are arranged in a plurality of rows in the first direction X.

It is to be understood that the plurality of sub-openings 331a are arranged at intervals in the first direction X, in the expansion process of the electrode assembly 32, the part between every two sub-openings 331a of the insulating member 33 can be deformed in the direction vertical to the first direction X and even fractured, and then expansion deformation of the electrode assembly 32 can be released.

Therefore, the opening 33a includes the plurality of sub-openings 331a, the plurality of sub-openings 331a are arranged at intervals at least in the first direction X, and then expansion deformation of the electrode assembly 32 can be further released so as to improve the deformation consistency of the electrode assembly 32.

Optionally, the plurality of sub-openings 331a may be evenly arranged at intervals in the first direction X so as to further improve the deformation release consistency of the electrode assembly 32.

In some embodiments, the size of the insulating member 33 is L along the first direction X, the total size of the plurality of sub-openings 331a is L1, 1/3≤L1/L<1.

Optionally, L1/L may be 1/3, 0.5, 0.6, 0.8 or 0.9 and the like.

It is to be understood that the greater the value of L1// L is, the smaller the size of the insulating member 33 located between the two sub-openings 331a along the first direction X is, and in the expansion process of the electrode assembly 32, under the action of expansion force, the parts, at the two ends of the sub-openings 331a along the first direction X, of the insulating member 33 are more prone to fracture, then the insulating member 33 is broken as a whole along the first direction X, and therefore the purpose of releasing the expansion deformation of the electrode assembly 32 is achieved.

In some embodiments, the thicknesses e of the parts, on the two sides of the sub-openings 331a along the first direction X, of the insulating member 33 meet: 0.03mm≤e≤0.2mm.

Optionally, e may be 0.03 mm, 0.05 mm, 0.08 mm, 0.1 mm, 0.12 mm, 0.15 mm, 0.2 mm, 0.25 mm or 0.3 mm and the like.

It is to be understood that if the value of the thickness e of the parts, on the two sides of the sub-openings 331a along the first direction X, of the insulating member 33 is too small, the processing of the sub-openings 331a in the insulating member 33 is not facilitated. If the value of the thickness e of the parts, on the two sides of the sub-openings 331a along the first direction X, of the insulating member 33 is too large, in the expansion process of the electrode assembly, the parts, on the two sides of the sub-openings 331a along the first direction X, of the insulating member 33 are difficult to fracture, the insulating member 33 generates certain binding force on the electrode assembly 32, and the consequence that the expansion deformation of the electrode assembly 32 cannot be released will be caused.

Therefore, the thickness e of the parts, on the two sides of the sub-openings 331a along the first direction X, of the insulating member 33 is set to meet the above relationship, thus the processing of the insulating member 33 is facilitated, the areas, on the two sides of the sub-openings 331a along the first direction X, of the insulating member 33 have small cross section area, then the small fracture stress is achieved; and under the action of expansion force of the electrode assembly 32, the areas, on the two sides of the sub-openings 331a in the first direction X, of the insulating member 33 can be fractured in time, and enough space will be reserved for expansion of the electrode assembly 32.

In some embodiments, the tab 322 is arranged at the end of the electrode main body 321 in the first direction X, the insulating member 33 extends beyond the electrode main body 321 in the first direction X, and the distance h by which the insulating member 33 extends beyond the electrode main body 321 meets: h≥2mm.

Optionally, h may be 2 mm or 2.5 mm or 3 mm or the like.

Optionally, the distance h by which the insulating member 33 extends beyond one end of the electrode main body 321 can be set to meet the above relationship, or, the distances h by which the insulating member 33 extends beyond two ends of the electrode main body 321 can be set to meet the above relationship.

It is to be understood that the distance h by which the insulating member 33 extends beyond the electrode main body 321 meets the above relationship, the insulating effect of the insulating member 33 on the electrode assembly 32 and the shell 31 can be guaranteed, and the risk of short circuit of the electrode assembly 32 and the shell 31 is reduced.

In some embodiments, the insulating member 33 is connected to the electrode main body 321 in a bonding manner.

Optionally, the insulating member 33 can be connected to a part of a contact part of the electrode main body 321 in a bonding manner, or the insulating member 33 is connected to the whole electrode main body 321 in a bonding manner.

The insulating member 33 is connected to the electrode main body 321 in a bonding manner, so there is a certain bonding force between the insulating member 33 and the electrode main body 321; and when the battery cell 30 is subjected to external loads such as vibration or impact, the connection relationship between the insulating member 33 and the electrode main body 321 will be kept, and the risk of insulation failure of the electrode main body 321 and the shell 31 caused by movement of the insulating member 33 relative to the circumferential direction of the electrode main body 321 is reduced.

In some embodiments, the support member 34 is connected to the insulating member 33 in a bonding manner.

It is to be understood that the support member 34 is connected to the insulating member 33 in a bonding manner, so the support member 34 does not move relative to the insulating member 33 in the circumferential direction of the electrode main body 321 in the normal working process of the battery cell 30, and the insulation effect of the support member 34 on the electrode main body 321 and the shell 31 is kept.

It is to be noted that in the expansion process of the electrode assembly 32, the bonding connection between the support member 34 and the insulating member 33 may be damaged under the action of the expansion force of the electrode assembly 32, so that the insulating member 33 is deformed, and the expansion deformation of the electrode assembly 32 is released.

In some embodiments, a part of the insulating member 33 is bent relative to the first direction X and covers at least part of the end of the electrode main body 321 along the first direction X.

Optionally, the two ends of the insulating member 33 along the first direction X can be provided with bent parts, or only one end of the insulating member 33 in the first direction X is provided with a bent part.

It is to be understood that the insulating member 33 is bent relative to the first direction X and covers at least part of the end of the electrode main body 321 along the first direction X, and the electrode main body 321 and the insulating member 33 can be clamped through the position, corresponding to the end of the electrode main body 321, of the insulating member 33, so that the risk that the insulating member moves along the first direction X to fail to realize the insulation between the electrode main body 321 and the shell 31 is reduced.

In some embodiments, the insulating member 33 includes a first insulating member 331 and a second insulating member 332; the first insulating member 331 includes a first part 3311 and two second parts 3312 connected to the first part 3311; the second insulating member 332 includes a third part 3321 and two fourth parts 3322 connected to the third part 3321; the first part 3311 is arranged opposite to one second surface 3212; the third part 3321 is arranged opposite to the other second surface 3212; and the second part 3312 and the fourth part 3322 which are positioned on the same side of the electrode assembly 32 are arranged opposite to the first surface 3211. The second part 3312 and the fourth part 3322 which are positioned on the same side of the electrode assembly 32 are arranged at intervals and form an opening 33a.

Therefore, the first insulating member 331 and the second insulating member 332 are oppositely arranged along the second direction Y, the first insulating member 331 and the second insulating member 332 are respectively in a "U" shape and are oppositely arranged, so that two openings 33a are formed in two opposite sides of the first insulating member 331 and the second insulating member 332, and the openings 33a are arranged opposite to second surfaces 3212.

According to such arrangement, on the basis of realizing the insulation effect of the first insulating member 331 and the second insulating member 332 on the electrode assembly 32 and the shell 31, the openings 33a which are formed across along the first direction X are respectively formed in the parts opposite to the two second surfaces 3212, so that the deformation consistency of the electrode assembly 32 is further improved.

In some embodiments, the support member 34 is respectively connected to the second part 3312 and the fourth part 3322 on the same side of the electrode assembly 32 in a bonding manner.

It is to be understood that the support member 34 is respectively connected to the second part 3312 and the fourth part 3322 on the same side of the electrode assembly 32 in a bonding manner, so that the support member 34 can cover the opening 33a, and the insulation arrangement of the electrode assembly 32 and the shell 31 is realized. In addition, the support member 34 is connected to the second part 3312 and the fourth part 3322 in a bonding manner, so that the risk of insulation failure of the electrode assembly 32 and the shell 31 caused by circumferential movement of the support member 34 relative to the electrode assembly 32 in the working process of the battery cell 30 is reduced.

The battery 10 provided by the embodiment of the present application includes the battery cell 30 provided by any one of the above embodiments.

The battery 10 provided by the embodiment of the present application adopts the battery cell 30 provided by any one of the embodiments, so it has the same technical effect, which will not be listed here.

An electrical apparatus provided by the embodiment of the present application includes the battery 10 provided by the embodiment, and the battery 10 is used for providing electric energy.

The electrical apparatus provided by the embodiment of the present application adopts the battery 10 provided by the embodiment of the present application, so it has the same technical effect, which will not be listed here.

It is to be noted that, without conflict, the embodiments in the present application and the features in the embodiments may be combined with each other.

Finally, it should be noted that, the above embodiments are merely used for describing the technical solution of the present application, instead of limiting the present application; although the present application is described in detail with reference to the foregoing embodiments, persons of ordinary skill in the art should understand that they can still make modifications on the technical solution recorded in the above embodiments, or perform equivalent replacements on a part of technical features thereof; these modifications or replacements are not intended to make the essences of the corresponding technical solutions depart from the spirit and scope of the technical solutions of the embodiments of the present application.

## Claims

1. A battery cell, comprising:
a shell;
an electrode assembly which is accommodated in the shell and comprises an electrode main body and a tab, the tab being led out from an end of the electrode main body;
an insulating member which is accommodated in the shell and is attached to the peripheral side surface of the electrode main body, wherein the insulating member is provided with an opening; and
a support member which is used for supporting the electrode assembly and covering the opening.

2. The battery cell according to claim 1, wherein the electrode assembly is provided with two first surfaces which are oppositely arranged in a second direction and two second surfaces which are oppositely arranged in a third direction; the second surfaces are connected to the two first surfaces; the tab is positioned at an end of the electrode main body in a first direction; the first direction, the second direction and the third direction are vertical to one another; and
at least one of the two first surfaces and the two second surfaces is opposite to the opening.

3. The battery cell according to claim 2, wherein openings are formed in parts, opposite to the two first surfaces, of the insulating member respectively.

4. The battery cell according to claim 3, wherein at least parts of the two openings are oppositely arranged in the second direction.

5. The battery cell according to claim 2, wherein the area of the first surfaces is smaller than that of the second surfaces, and at least part of at least one of the two first surfaces is opposite to the corresponding opening.

6. The battery cell according to claim 5, wherein the electrode assembly comprises two electrode plates with opposite polarities and a spacer, and the spacer and the two electrode plates are stacked in the third direction.

7. The battery cell according to claim 5, wherein the first surfaces are arc-shaped, and the second surfaces are planar.

8. The battery cell according to any one of claims 1 to 7, wherein in the circumferential direction of the electrode main body, the opening is provided with two opposite side edges, and a distance D between the two side edges meets: D≥0mm.

9. The battery cell according to claim 8, wherein in the direction where the two side edges are opposite, the size of the support member corresponding to the openings is W, and W>D.

10. The battery cell according to claim 9, wherein the shell is provided with an accommodating space, and the electrode assembly is accommodated in the accommodating space; in the direction where the two side edges are opposite, the maximum size of the accommodating space is S, and W-D≥0.07S.

11. The battery cell according to any one of claims 1 to 10, wherein the tab is arranged at an end of the electrode main body in the first direction, and the opening is formed across the insulating member in the first direction.

12. The battery cell according to any one of claims 1 to 10, wherein the tab is arranged at the end of the electrode main body in the first direction, the opening comprises a plurality of sub-openings, and the sub-openings are arranged at intervals at least in the first direction.

13. The battery cell according to claim 12, wherein in the first direction, the dimension of the insulating member is L, the total dimension of the plurality of sub-openings is L1, and 1/3≤L1/L<1.

14. The battery cell according to claim 12 or 13, wherein the thickness e of the parts, on two sides of the sub-openings along the first direction, of the insulating member meets: 0.03mm≤e≤0.2mm.

15. The battery cell according to any one of claims 1 to 14, wherein the tab is arranged at the end of the electrode main body along the first direction; the insulating member extends beyond the electrode main body along the first direction, and the distance h by which the insulating member extends beyond the electrode main body meets: h≥2mm.

16. The battery cell according to any one of claims 1 to 16, wherein the insulating member is connected to the electrode main body in a bonding manner.

17. The battery cell according to any one of claims 1 to 16, wherein the support member is connected to the insulating member in a bonding manner.

18. The battery cell according to claim 2, wherein one part of the insulating member is bent relative to the first direction and covers at least one part of the end of the electrode main body along the first direction.

19. The battery cell according to claim 2, wherein the insulating member comprises a first insulating member and a second insulating member; the first insulating member comprises a first part and two second parts connected to the first part; the second insulating member comprises a third part and two fourth parts connected to the third part; the first part is arranged opposite to one second surface; the third part is arranged opposite to the other second surface; the second part and the fourth part on the same side of the electrode assembly are arranged opposite to the first surfaces; and
the second part and the fourth part on the same side of the electrode assembly are arranged at an interval and form the opening.

20. The battery cell according to claim 19, wherein the support member is respectively connected to the second part and the fourth part on the same side of the electrode assembly in a bonding manner.

21. A battery, comprising the battery cell according to any one of claims 1 to 20.

22. An electrical apparatus, comprising the battery according to claim 21, wherein the battery is used for providing electric energy.
